# EUROPÄISCHE PATENTSCHRIFT

(11) **EP 3 515 799 B1**
(45) Veröffentlichungstag und Bekanntmachung des Hinweises auf die Patenterteilung: **19.03.2025**
(21) Anmeldenummer: 17783389.4
(22) Anmeldetag: 19.09.2017
(51) Int. Cl.: B63B 7/04

(54) **SCHIFFSMODELL**
SHIP MODEL
MODÈLE DE NAVIRE

(30) Priorität: 20.09.2016 DE 102016011279
(43) Veröffentlichungstag der Anmeldung: 31.07.2019
(73) Patentinhaber: Eismann Innvations GmbH, 48143 Münster (DE)
(72) Erfinder: EISMANN, Joachim, 48143 Münster (DE)
(74) Vertreter: Busse, Harald F.W.
(86) Internationale Anmeldenummer: PCT/EP2017/001110
(87) Internationale Veröffentlichungsnummer: WO 2018/054531

(56) Entgegenhaltungen:
- WO-A1-2005/047096
- DE-A1- 10 142 447
- DE-U1- 29 812 358
- ES-A1- 2 333 285
- GB-A- 1 096 359
- JP-A- H1 162 006
- US-A- 1 462 800
- US-A- 2 533 220
- US-A- 6 115 974

## Beschreibung

Die Erfindung betrifft ein Verfahren zur kontrollierten und möglichst naturgetreuen Darstellung eines Schiffsuntergangs nach dem Oberbegriff des Anspruchs 1 sowie ein Schiffsmodell nach dem Oberbegriff des Anspruchs 5.

Für viele Menschen sind Schiffuntergänge ein sehr bewegendes Thema. Insbesondere der Untergang der Titanic hat zahlreiche Filme und Publikationen nach sich gezogen, in denen dieser Untergang behandelt und teilweise nachgestellt wurde. Dabei wurden insbesondere für die Filme verkleinerte Schiffsmodelle oder Modelle von nur Teilbereichen des Schiffes verwendet, so daß erst durch die Filmabbildung ein realistisch wirkendes Szenario entstehen konnte. Eine Live-Betrachtung des Untergangs dieses Modells hätte hingegen völlig unrealistisch gewirkt.

Für eine Live-Betrachtung stellt sich das Problem, daß bei dem Untergang der Titanic der vordere Bereich vor dem angenommenen Auseinanderbrechen des Schiffes sehr steil unter Wasser stand, während das Heck sehr steil aus dem Wasser ragte. Bei einer Schiffslänge von ca. 280 Metern müßte dann eine Wassertiefe von ca. 150 Metern zur Verfügung stehen, um diese Art des Untergangs realitätsnah mit einem 1:1-Modell nachstellen zu können. Dies würde ein kontrolliertes Untergehen- und Wiederauftauchenlassen des Schiffsmodels erheblich erschweren.

Die ES 2 233 285 A1 zeigt ein fahrtaugliches Schiff, das in mehrere Module hintereinander geteilt ist. Dabei handelt es sich nicht um ein Schiffsmodell. Bei diesem sollen das vordere und das hintere Segment teilweise (nicht vollständig) unter Wasser gedrückt werden können, um damit bei Sturm eine stabilere Lage des Schiffes erreichen zu können. Ein solches seetaugliches Schiff ist jedoch mit sehr hohen Kosten verbunden.

Die DE 101 42 447 A1 zeigt ebenfalls ein fahrtaugliches Frachtschiff - und kein Schiffsmodell, das als flexibler Koppelverband aus miteinander gekoppelten Leichtern ausgebildet ist. Ein Untergang auch nur eines dieser Segmente wäre fatal und ist nicht vorgesehen.

Die GB 1 096 359 A zeigt in ähnlicher Weise eine gelenkige Verbindung von mehreren aufeinander folgenden Segmenten eines Frachtschiffs. Auch wäre ein Untergang auch nur eines dieser Segmente verheerend und ist daher nicht vorgesehen.

Die US 1 462 800 A und die US 2 533 220 A zeigen Faltboote aus mehreren Segmenten, die gegeneinander eingefaltet werden können. Ein Untergang auch nur eines dieser Segmente wäre fatal und ist nicht vorgesehen.

Die DE 298 12 358 U1 zeigt ein in sich starres Schiffsmodell für die Badewanne.

Der Erfindung liegt das Problem zugrunde, auch eine Live-Betrachtung eines Untergangs in einem realistisch erscheinenden Ablauf für viele Menschen zu ermöglichen.

Die Erfindung löst dieses Problem durch Verfahren mit den Merkmalen des Anspruchs 1 sowie durch ein Schiffsmodell mit den Merkmalen des Anspruchs 5. Hinsichtlich vorteilhafter Ausgestaltungen wird auf die abhängigen Ansprüche 2 bis 4 und 6 bis 19 verwiesen.

Durch die Erfindung ist bei dem offenbarten Schiffsmodell die erforderliche Wassertiefe dadurch erheblich verringert, daß der Schiffskörper über seine Längserstreckung in mehrere gegeneinander bewegliche und unter eine Wasseroberfläche versenkbare Segmente geteilt ist, so daß diese Segmente insbesondere im für das Publikum nicht sichtbaren Bereich unter Wasser gegeneinander bewegt werden können und eine raumsparende, nur eine geringe Wassertiefe benötigende Lage einnehmen können. Die Segmente sind miteinander gelenkig verbunden, so daß sie gegeneinander schwenken können und dadurch ihre Winkelstellungen gegeneinander ändern können. So kann beispielsweise unter Wasser ein Segment ungefähr horizontal stehen, während ein damit verbundenes Segment um einige 10° aufgerichtet ist.

Dabei ist der Schiffskörper in zumindest zwei Segmente geteilt, die gegeneinander verschwenkbar sind, um beim Untergang einen vorderen Teil schon wieder in horizontale Richtung schwenken zu können, wenn der Heckteil noch hoch aufgerichtet ist.

Insbesondere ist der Schiffskörper in zumindest vier Segmente geteilt, so daß die einzelnen Segmente nicht zu schwer werden und ihre Relativbewegung gegeneinander optisch unauffällig und unter Wasser vereinfacht ist.

Sofern einzelne Segmente unter die Wasseroberfläche versenkbar sind, während andere zumindest noch im wesentlichen oberhalb der Wasseroberfläche verbleiben, ergibt sich ein realistischer Ablauf, bei dem Teile des Schiffes schon unter Wasser sind. Das Schiff muß daher nicht als ganzes gleichmäßig abgesenkt werden. Aufgrund der Beweglichkeit der Segmente gegeneinander wird dennoch nur eine geringe Wassertiefe benötigt.

Wie beim tatsächlichen Untergang der Titanic kann auch hier das Schiffsmodell zunächst insgesamt in eine kontrollierte, zusammenhängende und teilweise unter der Wasseroberfläche liegende Schrägstellung verbracht werden, etwa so, daß der Bug bereits unter Wasser liegt und nicht mehr sichtbar ist, während das Heck hoch aus dem Wasser aufragt.

Besonders günstig kann ein zumindest nahezu vollständig unter der Wasseroberfläche liegendes Segment dort gegenüber einem dahinter liegenden Segment um seine gelenkige Anbindung aufschwenkbar sein und dadurch in eine zumindest nahezu horizontale Stellung unter der Wasseroberfläche gebracht werden. Dann ist die für dieses Segment benötigte Wassertiefe deutlich verringert und benötigt nur die Höhe des Rumpfs zuzüglich der Aufbauten, ggf. zuzüglich eines Schornsteins oder Masts. Dadurch, daß die Beweglichkeit der Segmente gegeneinander über Wasser für das Publikum nicht erkennbar ist, bleibt der realistische Eindruck voll gewahrt.

Besonders eindrucksvoll ist es, daß einzelne Segmente über eine Mehrgelenkanordnung miteinander verbunden sind und darüber ein Aufstellen eines oder mehrerer insbesondere heckwärts liegender Segmente in eine aufragende, um mehr als 60° gegenüber der Wasseroberfläche geneigte Stellung möglich ist. Dann können zum Beispiel in dieser Stellung die Propeller und Ruderblätter hoch aus dem Wasser ragen.

Ebenso ist es dann möglich, daß das oder die aufgestellte(n) Segment(e) in ihrer aufragenden Stellung unter die Wasseroberfläche absenkbar ist oder sind. Dies entspricht auch dem tatsächlichen Untergangsszenario der Titanic, bei dem das Heckteil sich zunächst hoch aufstellte und dann in dieser Hochkantlage in die Tiefe absank. Auch insofern ist dann eine realistische Abbildung des Geschehens möglich.

Um die Relativbewegungen der einzelnen Segmente zu ermöglichen, können alle oder zumindest einzelne Segmente mit variabel befüll- und entleerbaren Auftriebstanks versehen sein. Damit ist dann über deren Entleerung oder Befüllung eine Lageveränderung dieses oder dieser Segment(e) bewirkbar, zum Beispiel durch Einblasen von Luft ein Anheben und damit ein Aufschwenken eines Segments gegen das nächstfolgende. Zusätzlich oder alternativ kann das Segment auch am Boden eines Beckens geführt sein, zum Beispiel über dort bewegliche Schlitten oder Gestänge.

Wie schon angedeutet, kann das Schiffsmodell insbesondere in einem Becken gehalten sein, was den Vorteil hat, daß ein definierter Trübungsgrad des Wassers eingestellt werden kann, ohne daß am untergegangenen Schiffsmodell zu großer Algenbewuchs entsteht. Weiter kann oder können mit der Beckenlösung jedes Segment oder zumindest einzelne Segmente in ihrer abgesenkten Stellung von dem Beckengrund abgestützt sein, etwa indem sie auf dem Beckengrund aufliegen. Zudem kann in dem Becken ein definierter Wellengang eingestellt werden.

Insbesondere kann das Becken bei einer Länge des Schiffsmodells von mehr als 200 Metern eine Tiefe von weniger als 40 Metern aufweisen und damit in den Ausmaßen moderat gehalten werden.

Für eine maximal realistische Verlaufsdarstellung kann das Becken und/oder das Schiffsmodell so angepaßt sein, daß ein den aufragend stellbaren Segmenten vorgeordnetes Segment des Schiffsmodells in seiner abgesenkten Stellung in einer schräg nach hinten ansteigenden Lage halterbar ist.

Bei einer Anpassung des Schiffsmodells kann das vorgeordnete Segment eine hierfür gegenüber der Kiellinie weiterer Segmente nach unten ausgreifende Kiellinie aufweisen, um damit zum Beispiel auf dem Beckengrund schräg zum Liegen zu kommen.

Zusätzlich oder alternativ kann zur Abstützung des abgesenkten vorgeordneten Segments der Beckengrund eine aufwärts weisende und nach oben stufenartig abgesetzte Schrägfläche aufweisen.

Eine besondere Effektivität des Untergangsszenarios lässt sich erreichen, wenn das Schiffsmodell von einer hallenartigen Decke überwölbt ist und an diese unterschiedliche optische Szenarien projizierbar sind, beispielsweise ein Nachthimmel, der den realen Gegebenheiten etwa beim Untergang der Titanic entspricht. Auch ein Tagszenario kann eingestellt werden.

Hierfür ist das Schiffsmodell insbesondere nach Art eines Passagierschiffs in möglichst realistischer Nachbildung - zumindest der Außenanlagen - ausgebildet.

Der Effekt ist um so eindrucksvoller, je näher das Modell auch in seinen Ausmaßen an das Original heranreicht. Ein Maßstab von 1:2 bis idealerweise 1:1 ist daher wünschenswert. Das Modell ist in jedem Fall begehbar, wobei die Passagiere eventuell auch noch bei einer beginnenden Schräglage an Bord bleiben können. Auch die Evakuierung kann mehr oder weniger realistisch über Rettungsboote oder auch über Stegzugänge erfolgen.

Das erfindungsgemäße Verfahren dient zur geordneten Simulation eines Schiffsuntergangs, bei dem ein Schiffsmodell unter eine Wasseroberfläche versenkt wird und bei dem das Schiffsmodell zunächst in eine insgesamt schräg stehende und dadurch einen Teil des Schiffsmodells unter die Wasseroberfläche drückende Lage verbracht wird, wobei nach vollständiger Absenkung eines ersten Segments unter die Wasseroberfläche dieses in eine aufschwenkende und in eine zumindest nahezu horizontale Lage öffnende Stellung gegenüber dem nächsten Segment gebracht wird. Insbesondere bei größeren Schiffen gilt diese Relativbewegung nicht nur für das erste Segment, sondern auch für weitere Segmente: Nach vollständiger Absenkung eines auf ein bereits abgesenktes Segment nächstfolgenden Segments unter die Wasseroberfläche wird dieses in eine gegenüber seinem heckwärts anschließenden Segment aufschwenkende und in eine horizontale Lage öffnende Stellung gebracht, so daß trotz eines schrägenden Absinkens die Segmente nach und nach unter Wasser wieder ihre horizontale, fluchtend hintereinander liegende Stellung einnehmen können. Dieses Zusammensetzen unter Wasser ist jedoch nicht zwingend.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein Schiffsmodell aus mehrere aufeinander folgenden Segmenten in schematischer Seitenansicht in vollständig schwimmender Lage,
- Fig. 2: eine ähnliche Ansicht wie Figur 1, jedoch bei einer schrägen, über den Bug absinkenden Lage des Schiffsmodells, wobei ein vom Bug aus gesehen 1. Segment gegenüber einem folgenden 2. Segment in eine im wesentlichen horizontale Lage aufwärts geschwenkt ist,
- Fig. 3: eine ähnliche Ansicht wie Figur 2 bei weiterem Absinken des Schiffes, wobei das 1. und das 2. Segment gemeinsam gegenüber dem 3. Segment in eine horizontale Lage aufwärts verschwenkt sind und wobei die nicht verschwenkte Lage dieser Segmente zum Vergleich gestrichelt eingezeichnet ist,
- Fig. 4: eine ähnliche Ansicht wie Figur 3, wobei jedoch ein 3. Segment gegenüber dem darauf heckwärts folgenden Segment zur Simulierung eines Auseinanderbrechens des Schiffskörpers nach unten verschwenkt ist,
- Fig. 5: eine ähnliche Ansicht wie Figur 4 bei unter Wasser an die vorderen Segmente herangeschwenktem 3. Segment und bei beginnender Aufrichtung der heckwärtigen Segmente,

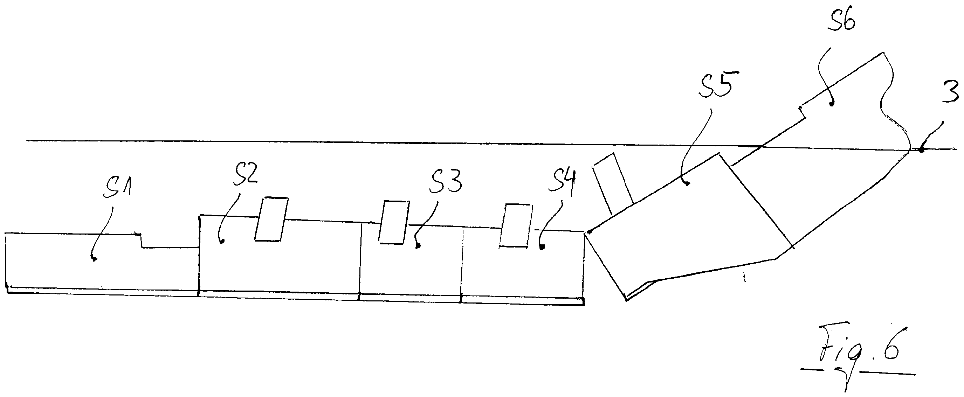

- Fig. 6: eine ähnliche Ansicht wie Figur 5, nachdem das 4. und 5. Segment vollständig unter Wasser liegen und das 5. Segment dabei noch fluchtend zum Hecksegment steht,

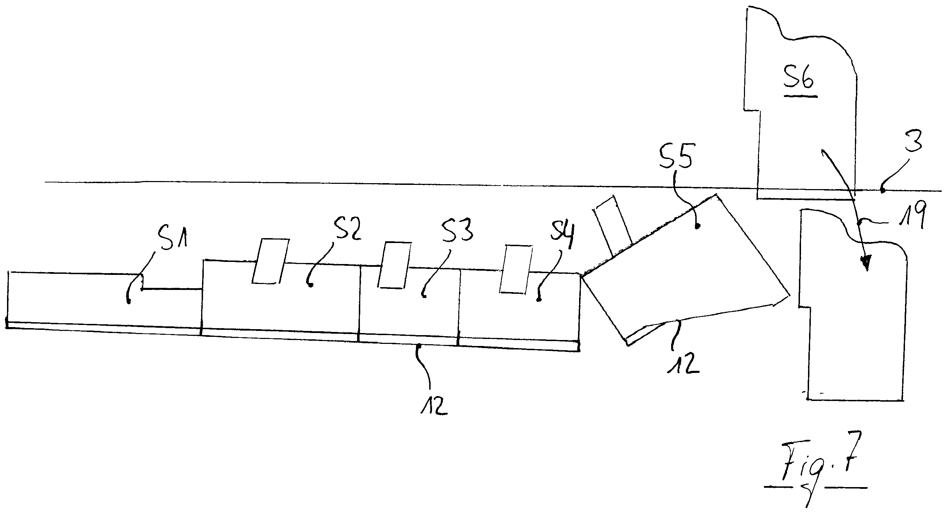

- Fig. 7: eine ähnliche Ansicht wie Figur 6 bei gleichbleibender Lage des fünften Segments und steiler Aufrichtung sowie nachfolgendem steilem Absenken des 6. Segments,

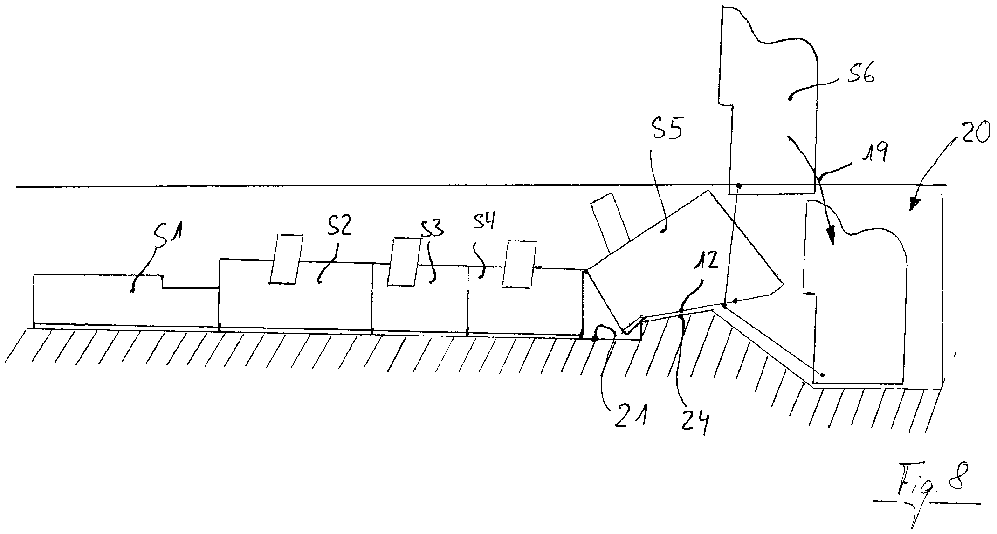

- Fig. 8: eine ähnliche Ansicht wie Figur 7 mit einem zusätzlich eingezeichneten Becken, in dem das Schiffsmodell aufgenommen ist,

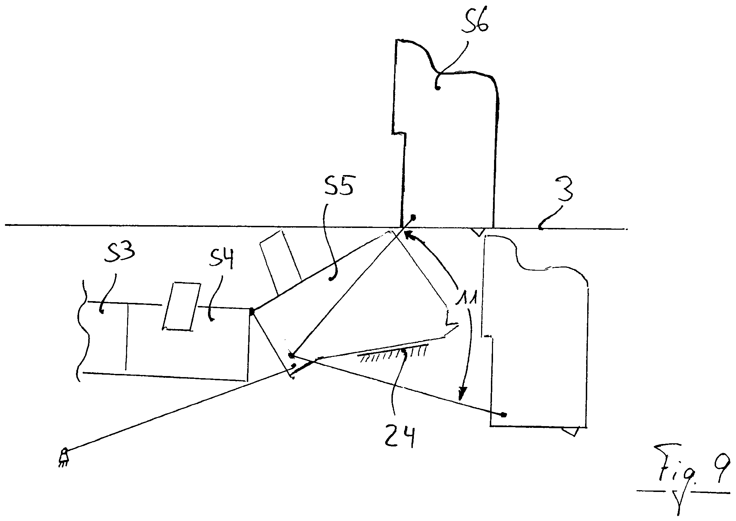

- Fig. 9: eine Detailansicht der heckwärtigen Segmente 4, 5 und 6 in den Positionen nach Figur 7,
- Fig. 10: ein alternatives Schiffsmodell in Lage wie in Figur 1, jedoch mit einem über motorisch bewegliche, insbesondere schwenkbare, Lenker im Bereich eines Beckengrunds beweglich gehaltenen Segmenten,

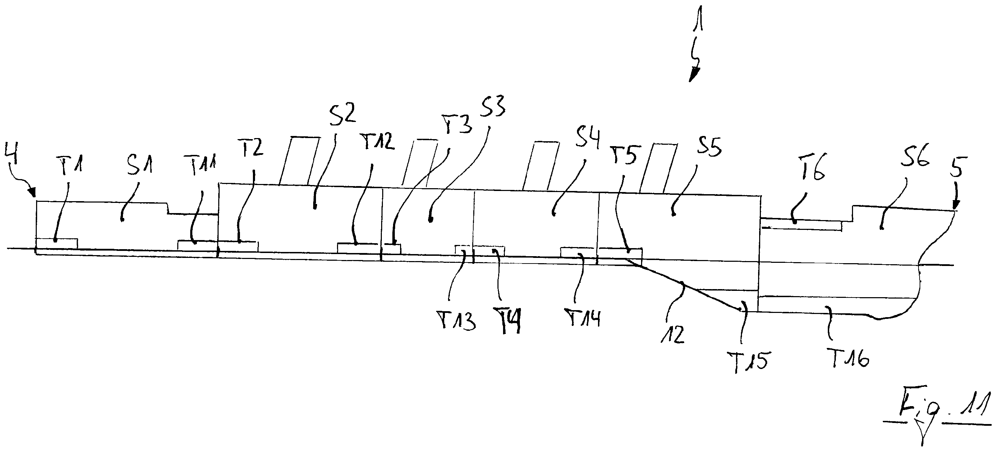

- Fig. 11: eine ähnliche Ansicht des Schiffsmodells wie in Figur 1, wobei zusätzlich Auftriebstanks in den einzelnen Segmenten eingezeichnet sind,

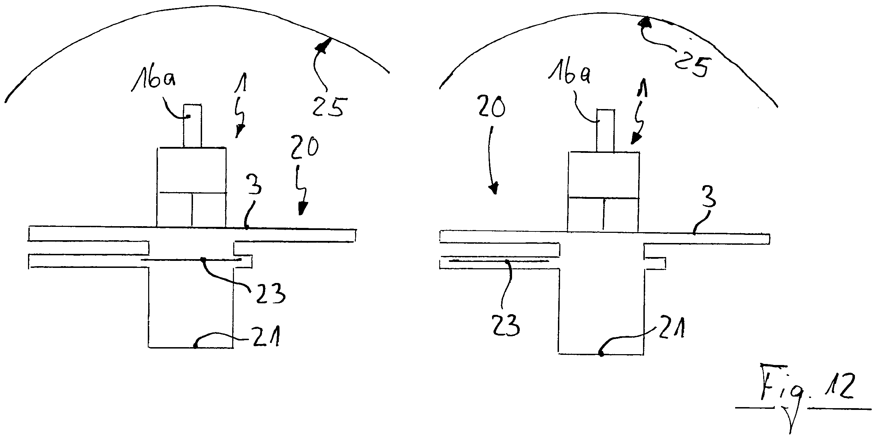

- Fig. 12: eine Ansicht des Beckens zur Halterung des Schiffsmodells in Ansicht von vorne mit einem geschlossenen Schieber (links) und einem geöffneten Schieber (rechts),

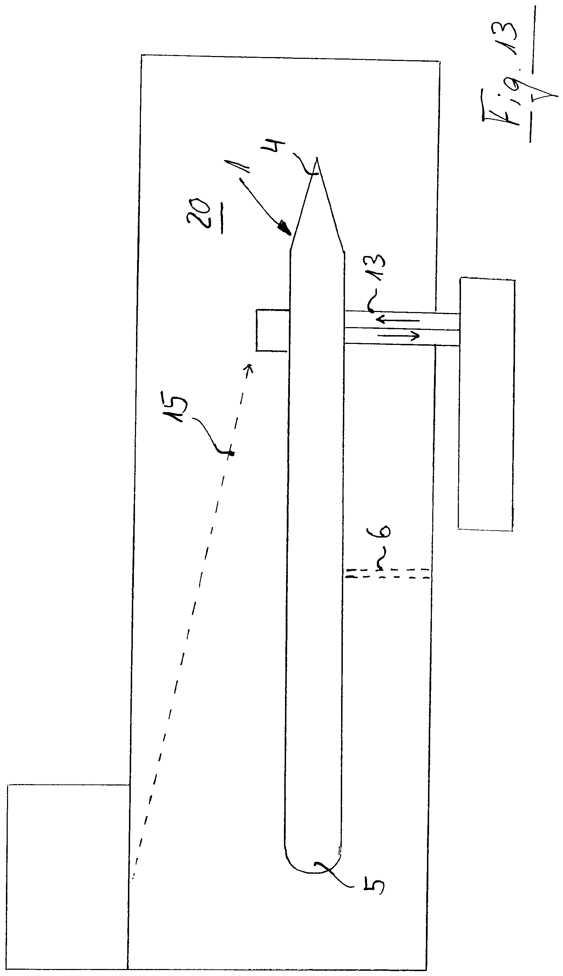

- Fig. 13: eine Ansicht des im Becken gehaltenen Schiffsmodells von oben mit einem Steg und einem einen Innenraum simulierenden Übergangssteg für das Ein- und Aussteigen der Passagiere.
- Fig. 14: eine Draufsicht auf einen vorderen Teil des Schiffsmodells, das hier seitlich über unter der Wasseroberfläche endende und seitlich neben dem Schiffsmodell angeordnete Pfosten geführt ist, wobei der vordere Pfosten in ein Langloch als "Loslager" eingreift, um damit eine Schrägstellung des gezeigten Teils ausgleichen zu können,
- Fig. 15: den in Figur 14 gezeigten Teil des Schiffsmodells in Seitenansicht,
- Fig. 16: den in Figur 15 gezeigten Teil des Schiffsmodells mit zusätzlich eingezeichneten Auftriebskörpern und Lagerstellen, unter die unter der Wasseroberfläche am Grund gehaltene Auftriebskörper eingreifen können,
- Fig. 17: den in Figur 15 gezeigten Teil des Schiffsmodells in einer abgesunkenen Schwimmstellung unter der Wasseroberfläche,
- Fig. 18: eine Ansicht von vorne oder hinten auf einen schwimmenden Teil des Schiffsmodells,
- Fig. 19: eine Ansicht von vorne auf den abgesunkenen Teil des Schiffsmodells aus Figur 18, wobei die Höhe des Schiffskörpers durch ein Auswandern von unteren Teilen des Rumpfs nach quer außen bei gleichzeitiger Aufwärtsbewegung gegenüber dem oberen Teil des Rumpfs verringert ist.

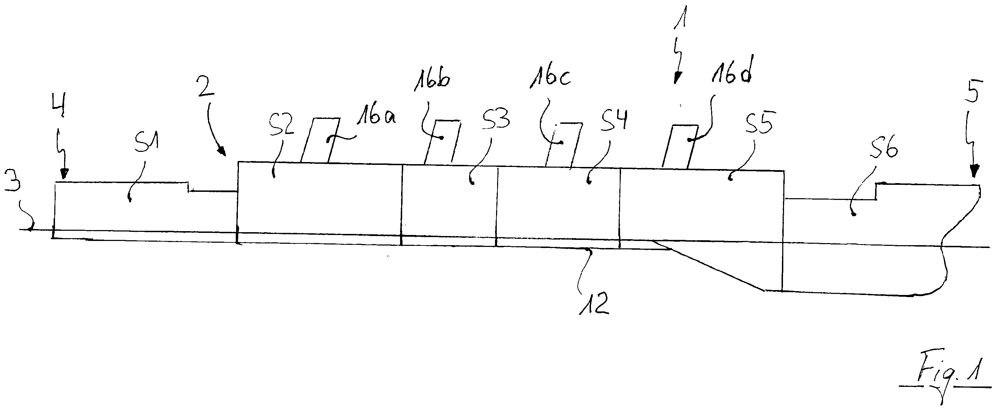

Das in Figur 1 gezeigte Schiffsmodell 1 zeigt einen lang erstreckten Schiffskörper 2, der insbesondere für eine große Zahl von Menschen begehbar sein kann und daher bezüglich der äußeren Anmutung und Materialien nahe am Original gebaut sein kann. Beispielsweise kann das Schiffsmodell 1 im wesentlichen aus Stahl oder Holz angefertigt sein, die Decks können zumindest teilweise mit Holz belegt sein. Das Schiffsmodell 1 ist für seine Begehbarkeit und den authentischen Eindruck im Maßstab ebenfalls vorzugsweise nahe dem Original gehalten. Insbesondere kommt ein Maßstab zwischen 1:2 und 1:1 in Betracht.

Insbesondere ist das Schiffsmodell 1 nach Art eines Passagierschiffs - hier der Titanic - ausgebildet, aber auch Frachtschiffe oder Kriegsschiffe kommen in Betracht.

Der Schiffskörper 2 benötigt keinen eigenen Antrieb oder eigene Möglichkeit zur Generierung elektrischer Energie. Diese kann von außen eingekoppelt werden. Auch eine Inneneinrichtung des Schiffskörpers 2 kann im wesentlichen entbehrlich sein. So kann es genügen, etwa eine begehbare Brücke und/oder einen großen Speisesaal und/oder Decks mit Rettungsbooten zu haben, während der Schiffskörper 2 ansonsten im wesentlichen einen Torso ausbildet, also ein Gerippe, das außerhalb seiner tragenden Strukturen im wesentlichen Hohlräume umfaßt.

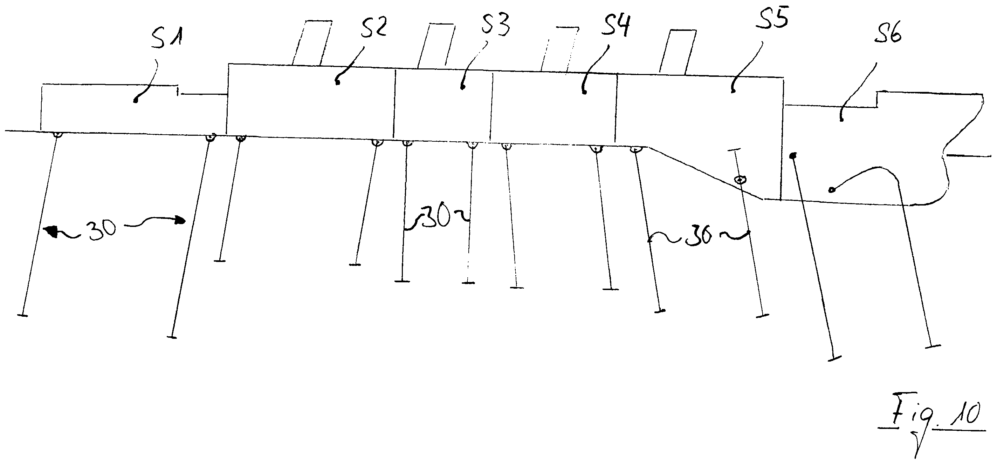

Der Schiffskörper 2 kann je nach Ausführung selbst schwimmfähig sein oder, wie in Figur 10 angedeutet, über motorisch bewegbare Lenker 30 insgesamt so gehalten sein, daß er dann nicht zwingend eine eigene Schwimmfähigkeit benötigt. Bei einer bestehenden Schwimmfähigkeit können anstatt der Lenker 30 auch einzeln ansteuerbare Zugseile vorgesehen sein, um die jeweiligen Segmente S1, S2, S3, S4, S5, S6 nach unten zu ziehen und in ihrer jeweiligen Winkelstellung passend auszurichten.

In jedem Fall ist der Schiffskörper 2 über seine Längserstreckung L in mehrere gegeneinander bewegliche und unter eine Wasseroberfläche 3 versenkbare Segmente S1, S2, S3, S4, S5, S6 geteilt. Die Anzahl der Segmente S1, S2, S3, S4, S5, S6 kann unterschiedlich sein, hier sind zumindest zwei gegeneinander bewegliche Segmente vorgesehen, insbesondere zumindest vier Segmente. Die Trennungsfugen zwischen den Segmenten sind von außen optisch möglichst nicht erkennbar. Die Segmente können, da sie im wesentlichen nur Stahlkästen ausbilden, jeweils mehrere 10 Meter lang sein, zum Beispiel hier etwa 30 bis 50 Meter.

Gemäß dem gezeichneten Ausführungsbeispiel sind über die Längserstreckung L sechs Segmente S1, S2, S3, S4, S5, S6 vorgesehen, um einen möglichst realistischen Ablauf des Untergangs der Titanic mit einem Durchbrechen des Schiffes im mittleren Bereich und einem steilen Anheben des Heckbereichs nachstellen zu können.

Die Segmente S1, S2, S3, S4, S5, S6 sind hier miteinander gelenkig verbunden, wobei im Detail je nach gewünschtem Bewegungsablauf Gelenke mit einem Freiheitsgrad ausreichen können oder Mehrgelenkanordnungen mit mehreren Freiheitsgraden der Bewegung erforderlich sind. Dies ist im Detail weiter unten ausgeführt. Es können auch beispielsweise die Segmente S1, S2 und/oder S3 zu einem gemeinsamen Segment zusammengefaßt sein. Auch die Unterteilung eines Segments in mehrere Untersegmente ist möglich (Beispiel S6).

Die Segmente S1, S2, S3, S4, S5, S6 können jeweils über flutbare Tanks bzw. Auftriebskörper T1, T11, T2, T12, T3, T13, T4, T14, T5, T15, T6, T16 verfügen, über deren kontrollierte Bewässerung bzw. Belüftung die Relativlage des jeweiligen Segments und sein Aufschwimmen über oder sein Absenken unter die Wasseroberfläche 3 einstellbar sind.

So kann bei entsprechender Teilflutung, insbesondere der Tanks T1, T11, T2, T12 der vorderen Segmente S1, S1 der Schiffskörper S2 als ganzes in eine kontrollierte, zusammenhängende und teilweise unter der Wasseroberfläche 3 liegende Schrägstellung verbracht werden, in der beispielsweise der Bug 4 bereits unter der Wasseroberfläche 3 liegt und das Heck 4 hoch über diese hinausragt. Auch eine Drehbarkeit des Hecks 4 um eine Längsachse ist möglich.

Es ist möglich, daß bei Beginn dieser beginnenden Schrägstellung noch Menschen an Bord des Schiffsmodells 1 sind, um so den Untergang hautnah erleben und fühlen zu können, ehe eine vollständige Evakuierung einsetzt, entweder über einen an Land führenden Steg 6 oder über Rettungsboote.

Neben der Gesamtabsenkung der zusammenhängenden Segmente ist es auch möglich, daß einzelne Segmente (zum Beispiel S1, bis S3) unter die Wasseroberfläche 3 versenkbar sind, während andere (zum Beispiel S4 bis S6) in einer Schwimmstellung auf der Wasseroberfläche 3 verbleiben. Für eine möglichst geringe Wassertiefe können die Schornsteine 16a, 16b, 16c, 16d gegenüber den sie jeweils haltenden Segmenten S2, S3, S4, S5 einschiebbar oder einschwenkbar sein, um so während des Untergangs die Höhe der jeweiligen Segmente verringern zu können. Das Wegbrechen von Schornsteinen entspricht auch dem Ablauf des Originaluntergangs der Titanic. Gleiches gilt auch für eine Bewegbarkeit von Masten, die ebenfalls dem Originaluntergang nachempfunden werden kann.

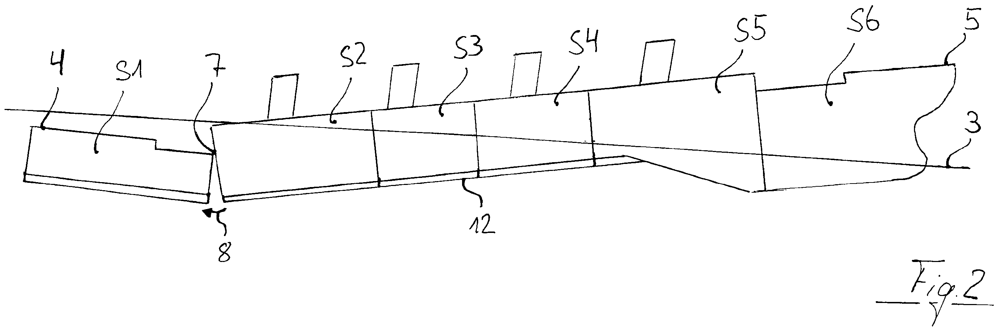

Dabei kann ein im jeweiligen Absenkzustand zumindest nahezu vollständig unter der Wasseroberfläche 3 liegendes Segment (zum Beispiel S1) dort gegenüber einem dahinter liegenden Segment (zum Beispiel S2) um seine gelenkige Anbindung, nämlich ein Schwenkscharnier 7 mit zumindest einem Freiheitsgrad, in Richtung des Pfeils 8 aufschwenken und dadurch in eine flachere, insbesondere zumindest nahezu horizontale Stellung unter der Wasseroberfläche 3 gelangen, wie in Figur 2 eingezeichnet ist.

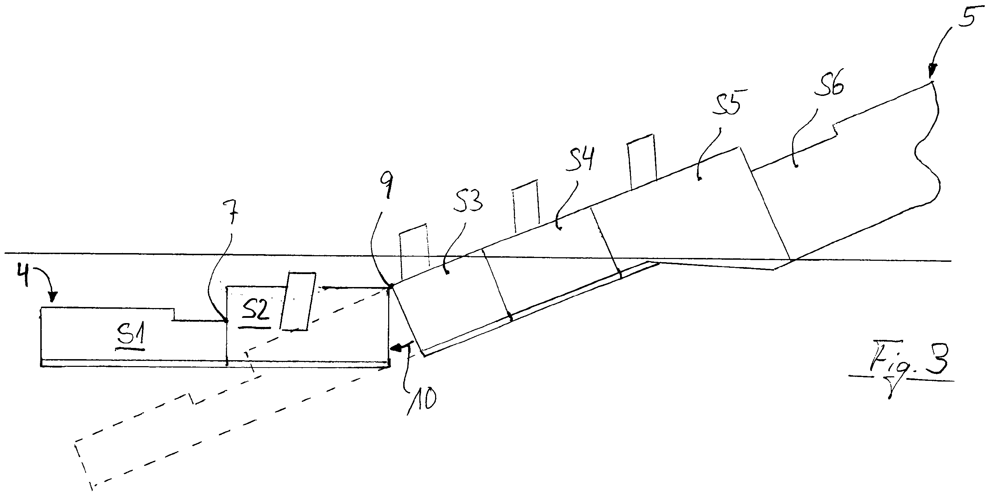

Dadurch benötigt das Segment S1 dann eine wesentlich geringere Wassertiefe. Gleiches gilt für das Gelenk 9 zwischen den Segmenten S2 und S3 in der Figur 3, die einen späteren Moment im Absinkprozeß darstellt. Dabei gelangen die Segmente S1 und S2 in die in Figur 3 gezeigte, in Richtung 10 geschwenkte, damit angehobene und nahezu horizontale Stellung, anstatt - wie gestrichelt eingezeichnet - geradlinig nach unten abzutauchen, was wesentlich mehr Wassertiefe erfordern würde.

An Stelle der einfachen Schwenkgelenke 7, 9 können auch einzelne Segmente (zum Beispiel S5 und S6) über eine Mehrgelenkanordnung 11 miteinander verbunden sein. Darüber ist ein Aufstellen eines oder mehrerer insbesondere heckwärts liegender Segmente (zum Beispiel des Segments S6) in eine aufragende, um mehr als 60° gegenüber der Wasseroberfläche 3 geneigte Stellung möglich. Auch eine um ca. 90° gegen die Wasseroberfläche 3 geneigte Stellung ist damit möglich, wie hier in der Zeichnung dargestellt ist. Dabei ist es nicht nur möglich, daß ein oder mehrere Segmente (hier das Segment S6) in der geschilderten Weise aufgestellt werden, sondern auch daß das oder die aufgestellte(n) Segment(e) in ihrer aufragenden Stellung unter die Wasseroberfläche 3 absenkbar ist oder sind.

Wie etwa in Figur 10 erkennbar ist, kann oder können entweder jedes Segment S1, S2, S3, S4, S5, S6, wie hier dargestellt, oder zumindest einzelne Segmente mit variabel befüll- und entleerbaren Auftriebstanks T1, T11, T2, T12, T3, T13, T4, T14, T5, T15, T6, T16 versehen sein. Über deren Entleerung oder Befüllung sind Lageveränderungen dieses oder dieser Segment(e) bewirkbar. Da pro Segment hier zumindest zwei Auftriebstanks, z. B. T1, T11 im Segment S1, vorgesehen sind, eventuell auch mehr, kann darüber nicht nur gesteuert werden, ob das Segment als ganzes aufschwimmt oder unter die Wasseroberfläche 3 abgesenkt ist, sondern zudem kann auch die Relativlage dieses Segments beeinflußt werden. Bei manchen Segmenten kann auch ein oder sogar gar kein eigener Auftriebstank vorgesehen sein (hier nicht gezeichnet). Dadurch, daß im Segment S6 beispielsweise ein Tank T16 am oberen Ende unter der Deckslinie gehalten ist, kann durch dessen Befüllung die vertikal aufgerichtete Stellung dieses Segments S6 während seines Untergangs eingestellt und gehalten werden. Eine Flutung des Tanks T6 mit Luft sorgt hingegen für den benötigten Auftrieb, um das Anheben des Segments S6 über die Wasseroberfläche 3 einzuleiten.

Wenn das Schiffsmodell 1 in einem abgeschlossenen Becken 20 gehalten ist, ergeben sich mehrere Vorteile: zum einen können die Besucherströme kanalisiert und gesichert werden - anders als im offenen Meer, zum anderen kann das Wasser in seiner Zusammensetzung und Trübung so angepaßt werden, daß einerseits abgesunkene Segmente schnell unsichtbar werden, andererseits jedoch bei einem häufigen Absenken und Wiederauftauchen nicht von Algen überzogen werden, schließlich ist insbesondere auch eine Abstützung von allen oder einzelnen Segmenten S1, S2, S3, S4, S5, S6 im abgesenkten Zustand am Beckengrund 21 möglich. Auch ein konstanter Wellengang kann im Becken 20 eingestellt werden.

Das Becken kann 20 hierfür bei einer Länge des Schiffsmodells 1 von mehr als 200 Metern eine Tiefe unter der Wasseroberfläche 3 von weniger als 40 Metern aufweisen. Zudem kann das Becken 20 auch eine solche Form haben, daß es nur im quermittigen Bereich 22, in den das Schiffsmodell 1 abtaucht, eine derartige Tiefe aufweist und seitlich davon deutlich flacher ist, um die benötigte Wassermenge gering zu halten. Der Zugang zum tiefen Bereich 22 kann zudem durch einen Sperrschieber 23 oder ähnliches verschließbar sein.

Zudem kann zumindest ein den aufragend stellbaren Segmenten, hier dem heckwärtigen Segment S6, vorgeordnetes Segment S5 in seiner abgesenkten Stellung in einer schräg nach hinten ansteigenden Lage halterbar sein. Um diese Stellung zu ermöglichen, ist einerseits die - nicht sichtbare - Kiellinie 12 des hier vorgeordneten Segments S5 gegenüber der Kiellinie weiterer Segmente S1, S2, S3, S4 nach unten ausgreifend ausgebildet. Andererseits weist zur Abstützung dieses abgesenkten vorgeordneten Segments S5 der Beckengrund 21 eine aufwärts weisende und nach oben stufenartig abgesetzte Schrägfläche 24 auf, auf der das Segment S5 mit seiner Kiellinie 12 absetzbar ist. Es versteht sich, daß je nach Teilung des Schiffsmodells 1 und nach Art des Untergangs derartige Strukturen unterschiedliche Segmente betreffen und in unterschiedlichen Geometrien ausgebildet sein können.

Im Bereich des Hecksegments S6 wird durch das Aufbäumen die Kiellinie 12 über der Wasseroberfläche sichtbar, daher ist hier das Unterwasserschiff realistisch mit Schraubenwellen, Propellern und Ruderblättern (nicht eingezeichnet) ausgeführt.

Ferner kann das Becken 20 von einer hallenartigen Decke 25, insbesondere als Teil einer geschlossenen Halle, überwölbt sein. Diese Decke 25 kann etwa eine Krümmung mit einem großen Radius aufweisen, an dessen Innenseite unterschiedliche optische Szenarien, zum Beispiel ein Sternenhimmel und/oder ein auftauchender Eisberg, projizierbar sind. Ein Eisberg kann ebenfalls als realitätsnahes und ggf. bewegliches Modell im Becken 20 vorgesehen sein und auch eine reale Kollision mit dem Schiffskörper 2 vollführen, die von an Bord befindlichen Besuchern spürbar ist.

Zudem kann in das Wasser des Beckens 20 während des Untergangs Druckluft über etwa Schläuche unter der Wasseroberfläche 3 eingeleitet werden, um so das Brodeln des Meeres und den Luftaustritt aus dem Schiff nachzustellen.

Des weiteren ist es auch möglich, daß innerhalb eines Segments ein mit einer Inneneinrichtung versehener Bereich vorgesehen ist und vor dem Untergang auf einer den Besuchern abgewandten Seite aus dem Schiffskörper 2 herausgezogen und versteckt wird, ehe das Schiffsmodell 1 untergeht. Damit würde ein so großer Luftraum, der einen entsprechend großen Auftrieb erzeugen und den Untergang erschweren würde, rechtzeitig entfernt.

Zusätzlich oder alternativ kann ein wie ein Schiffsinnenraum gestalteter Übergangssteg 13 über zum Beispiel Wendeltreppen vom Schiffskörper 2 aus erreichbar sein. Diese Wendeltreppen können etwa so ausgebildet sein, daß Besucher den Eintritt in den Übergangssteg nicht bemerken und meinen, sie befänden sich immer noch auf dem Schiff. Dieser Übergangssteg kann dann in einen originalgetreu eingerichteten Innenraum 14 führen, der selbst nicht Bestandteil des Schiffskörpers 2 ist und ebenfalls nicht mit diesem untergeht. Ein solches Szenario ist etwa in der Draufsicht erkennbar. Zusätzlich ist dort sichtbar, daß die Besucher zum Beispiel auf der dem Übergangssteg 13 abgewandten Seite zum Beispiel per Boot auf der Linie 15 übergesetzt werden.

Alternativ kann auch eine Kaimauer vorgesehen sein, die nach Betreten des Schiffes abgesenkt oder verschoben wird und dann aus dem Sichtfeld entfernt ist.

Um einen möglichst naturgetreu dem tatsächlichen Untergangsverlauf entsprechenden Ablauf nachzubilden, wird das Schiffsmodell 1 durch zumindest teilweise Flutung des vom Bug 4 aus ersten und zweiten Segments S1, S2 zunächst in eine insgesamt schräg stehende und dadurch einen vorderen Teil des Schiffsmodells 1 unter die Wasseroberfläche 3 drückende Lage verbracht. Nach vollständiger Absenkung des ersten Segments S1 unter die Wasseroberfläche 3 wird durch Einblasen von Luft ein einen oder mehrere Auftriebstanks T1, T2 in eine über das Gelenk 7 in Richtung 8 aufschwenkende und in eine horizontale Lage öffnende Stellung gegenüber dem nächsten Segment S2 gebracht, wie in Figur 2 sichtbar ist.

Dieses Verfahren setzt sich nach Absenkung eines weiteren Segments S2 fort: dieses wird nach vollständiger Absenkung unter die Wasseroberfläche 3 in eine gegenüber seinem heckwärts anschließenden Segment S3 über das Gelenk 9 in Richtung 10 aufschwenkende und in eine horizontale Lage öffnende Stellung gebracht. Dabei schließt sich gleichzeitig das Gelenk 7 zwischen den Segmenten S1 und S2, so daß diese dann etwa fluchtend und mehr oder weniger horizontal unter der Wasseroberfläche 3 hintereinander liegen.

Je nach Anzahl von Segmenten kann dieses Verfahren sich weit nach hinten über mehrere Segmente fortsetzen.

Hier ist jedoch die Anbindung des Segments S3 and das heckwärts folgende Segment S4 abweichend, um ein Durchbrechen des Schiffes etwa in der Mitte - wie beim realen Untergang der Titanic - nachbilden zu können.

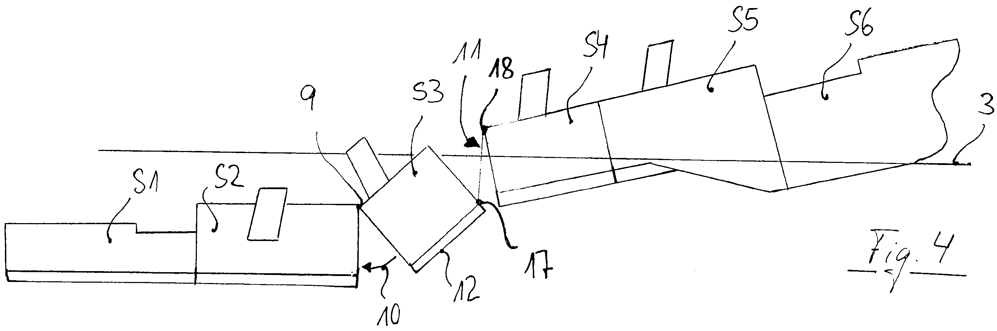

Hier öffnet das Segment S3 gegenüber dem heckwärts anschließenden Segment S4 zunächst oberhalb der Wasserlinie 3 um das untere Gelenk 17, so daß im sichtbaren Bereich sich ein Riß zwischen diesen Segmenten S3 und S4 öffnet (Figur 4). Gleichzeitig wird der Heckbereich aus den Segmenten S4 bis S6 über die Wasseroberfläche 3 angehoben, etwa durch Drucklufteinleitung in die Auftriebstanks T15 und T16.

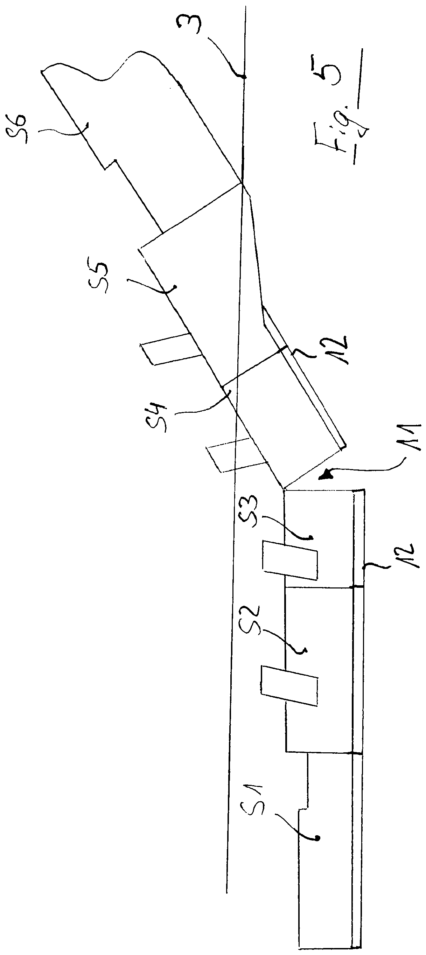

Nach Absenkung des von vorne dritten Segments S3 kann dieses um ein oberes Gelenk 18 gegen das heckwärts folgende Segment S4 öffnen und an die vorderen Segmente S1 und S2 fluchtend anschließen (Figur 5). Im Übergang vom vierten Segment S4 zum fünften Segment S5 sind die Verhältnisse wie zwischen den ersten beiden Segmenten S1 und S2, so daß nach Absenkung des vierten Segments S4 dieses dann horizontal und fluchtend hinter die anderen Segmente S1 bis S3 gestellt wird.

Das hier fünfte Segment S5 setzt während seines Absenkens aufgrund der besonderen Form seiner Kiellinie auf einer stufenartig hochstehenden Schrägfläche 24 des Beckengrunds 21 auf und ist dadurch in seiner Lage unverrückbar gehalten. Dabei öffnet die Mehrgelenkanordnung 11 gegenüber dem Heckteil, nämlich dem sechsten Segment S6, so daß dieses mit der Lufteinleitung in die Auftriebstanks T6 und T16 in die dem realen Untergang entsprechende Vertikalstellung oder zumindest um mehr als 60° gegenüber der Wasseroberfläche 3 geneigte Stellung gelangen kann und dann in Absenkrichtung 19 auch in dieser Ausrichtung unter Wasser abgesenkt werden kann, so daß sich ein besonders dramatischer und gleichzeitig realistischer Ablauf ergibt.

Diese Art der Absenkung muß nicht auf das eine Segment S6 beschränkt sein, sondern kann auch mehrere aufgestellte Segmente hintereinander betreffen.

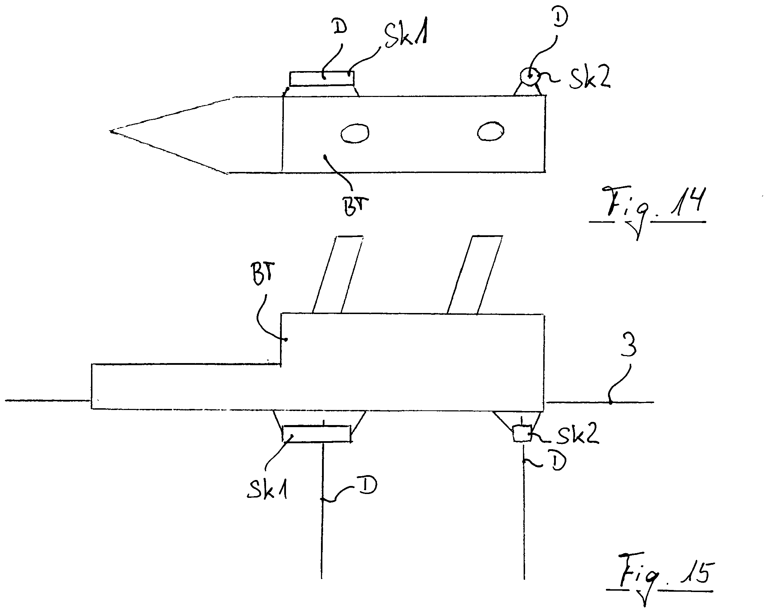

In den Figuren 14 und 15 ist noch eingezeichnet, daß ein Teil des Schiffsmodells 1, zum Beispiel hier ein Bugteil BT, auch seitlich an Dalben D oder anderen am Grund gehaltenen Befestigungen geführt ist. Die Dalben D oder anderen Befestigungen enden unsichtbar unterhalb der Wasseroberfläche 3. Der hier hintere Dalben D ist eng von einem Schwimmkörper SK2 umgeben, der eine horizontale Bewegung des Bugteils BT verhindert, der vordere Schwimmkörper SK1 bildet hingegen ein Langloch, so daß dort eine horizontale Verschiebung zum Dalben D möglich ist und damit auch ein Schrägabsenken dieses Bugteils BT trotz der Aufrechterhaltung der seitlichen Querführung möglich ist. Es versteht sich, daß derartige Lagerhalterungen auch für andere Schiffsteile und in verschiedenen Abwandlungen möglich sind.

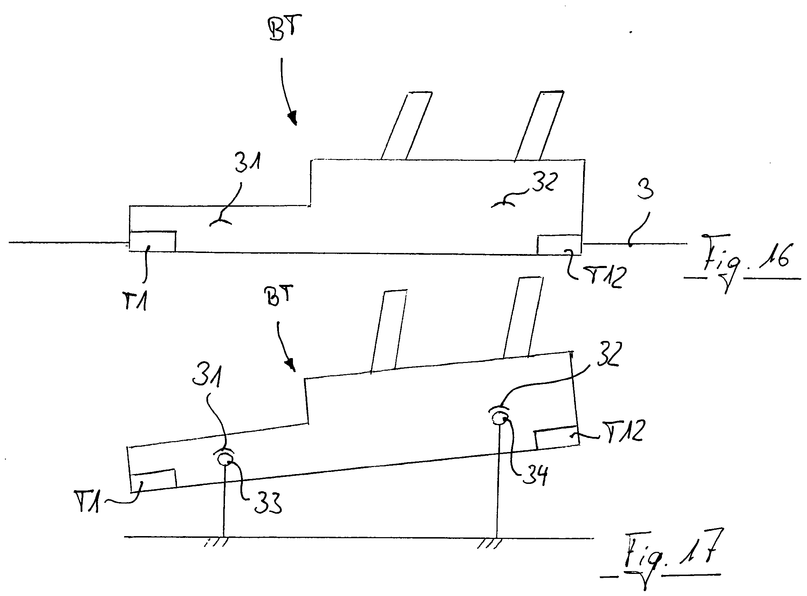

Die Version eines Bugteils BT nach den Figuren 16 und 17 zeigt, daß auch ein abgesenkter Teil des Schiffsmodells 1, hier der Bugteil BT, nicht bis auf den Grund abgesenkt werden muß, sondern auch in abgesenkter Stellung in einem Schwebezustand sein kann, in der er vollständig unsichtbar unter der Wasseroberfläche 3 liegt. Das Schiffsmodell 1 umfaßt hierfür in dem beispielhaft dargestellten Bugteil BT Lagerstellen 31, 32, die beim Sinken des Bugteils BT auf Auftriebskörpern 33, 34 aufsetzen, die ihrerseits am Grund über Ketten, Stahlseile, Dalben oder ähnliches festgehalten sind. Dabei sind die Auftriebstanks T1, T12 nur so weit mit Wasser gefüllt, daß sich ein langsames Absinken ergibt und bei Aufsetzen des Schiffskörpers BT, der zum Beispiel wie in den Figuren 14 und 15 seitlich geführt ist, auf den Auftriebskörpern 33, 34 das weitere Absinken endet und sich ein Gleichgewichtszustand des Schwebens einstellt. Der Grund muß dann nicht gesondert gestaltet sein, sondern kann beispielsweise eine natürliche Gestalt behalten. Es können sich auch zusätzliche Auftriebskörper im jeweiligen Schiffsteil befinden, so daß sich auch bei vollständig gefüllten Auftriebstanks T1, T12 der oben beschriebene Schwebezustand einstellt.

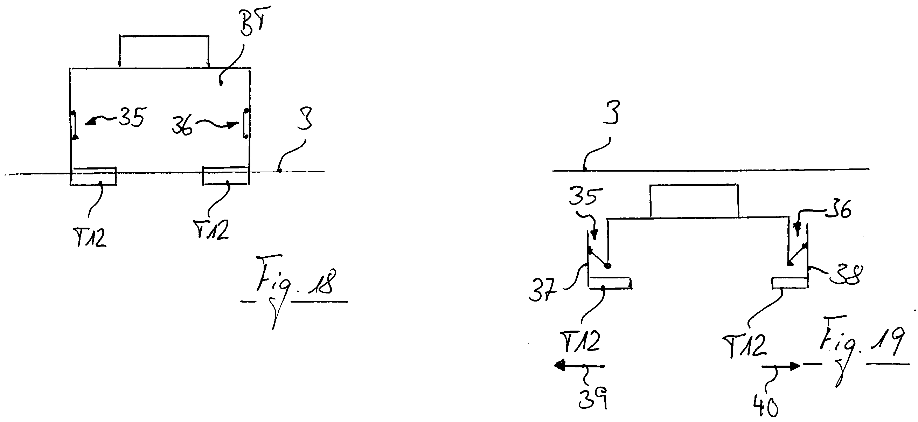

In den Figuren 18 und 19 ist noch eine Ansicht von vorne oder hinten auf einen schwimmenden Teil des Schiffsmodells, beispielsweise den Bugteil BT, dargestellt, wobei zusätzliche Gelenke oder ähnliche Teilungsmöglichkeiten 35, 36 vorgesehen sind, über deren Einknicken die Höhe des Schiffskörpers beim Untergang verringert werden kann. Dabei wird durch ein Auswandern von unteren Teilen 37, 38 des Rumpfs nach quer außen in Richtung der Pfeile 39, 40 bei gleichzeitiger relativer Aufwärtsbewegung gegenüber dem oberen Teil des Rumpfs die Höhe auf Kosten der zunehmenden Breite verringert. Der Schiffsteil BT wird dadurch insgesamt flacher, so daß die Wassertiefe weiter verringert werden kann, was die baulichen Anforderungen zur Realisierung der Erfindung weiter senkt. Es versteht sich, daß auch andere Einfaltungen (zum Beispiel nach quer innen) oder Einschwenkungen (zum Beispiel in eine horizontale Richtung nach quer innen oder quer außen) der unteren Teile 37, 38 des Rumpfs möglich sind, um die Höhe zu verringern. Dabei können die unterschiedlichen Schiffssegmente jeweils unterschiedliche Aufteilungen und/oder Verschwenkungsrichtungen aufweisen.

## Patentansprüche

1. Verfahren zur Simulation eines Schiffsuntergangs, bei dem ein Schiffsmodell (1) unter eine Wasseroberfläche (3) versenkt wird,
**dadurch gekennzeichnet,**
**daß** ein untergehendes Schiff durch ein über seinen Verlauf in mehrere Segmente (S1 ;S2 ;S3; S4 ;S5 ;S6) geteiltes Schiffsmodell (1) nachgestellt wird, das zunächst in eine insgesamt schräg stehende und dadurch einen Teil des Schiffsmodells (1) unter die Wasseroberfläche (3) drückende Lage verbracht wird, wobei nach vollständiger Absenkung eines ersten Segments (S1) unter die Wasseroberfläche (3) dieses in eine aufschwenkende Stellung gegenüber dem nächsten Segment (S2) gebracht wird.

2. Verfahren nach Anspruch 1,
**dadurch gekennzeichnet,**
**daß** wobei nach vollständiger Absenkung eines auf ein bereits abgesenktes Segment (zum Beispiel S1) nächstfolgenden Segments (zum Beispiel S2) unter die Wasseroberfläche (3) dieses in eine gegenüber seinem heckwärts anschließenden Segment (zum Beispiel S3) aufschwenkende und in eine horizontale Lage öffnende Stellung gebracht wird.

3. Verfahren nach einem der Ansprüche 1 oder 2,
**dadurch gekennzeichnet,**
**daß** einzelne Segmente (S5;S6) über eine Mehrgelenkanordnung (11) miteinander verbunden sind und darüber während der Untergangssimulation ein oder mehrere, insbesondere heckwärts liegende Segmente (S6) in eine aufragende, um mehr als 60° gegenüber der Wasseroberfläche (3) geneigte Stellung verbracht werden.

4. Verfahren nach Anspruch 3,
**dadurch gekennzeichnet,**
**daß** das oder die aufgestellte(n) Segment(e) (S6) in ihrer aufragenden Stellung unter die Wasseroberfläche (3) abgesenkt wird oder werden.

5. Schiffsmodell (1) für ein kontrolliertes Untergehen- und Wiederauftauchenlassen, mit einem lang erstreckten Schiffskörper (2), wobei der Schiffskörper (2) über seine Längserstreckung (L) in mehrere gegeneinander bewegliche und unter eine Wasseroberfläche (3) versenkbare Segmente (S1;S2;S3;S4;S5;S6) geteilt ist, wobei alle oder zumindest einzelne Segmente mit variabel befüll- und entleerbaren Auftriebstanks versehen und/oder am Boden eines Beckens geführt sind, wobei die Segmente (S1;S2;S3;S4;S5;S6) miteinander gelenkig verbunden sind und einzelne benachbarte Segmente (S3,S4;S5,S6) über eine Mehrgelenkanordnung (11) miteinander verbunden sind und darüber ein Aufstellen eines oder mehrerer insbesondere heckwärts liegender Segmente (S6) in eine aufragende, um mehr als 60° gegenüber der Wasseroberfläche (3) geneigte Stellung möglich ist.

6. Schiffsmodell (1) nach Anspruch 5,
**dadurch gekennzeichnet,**
**daß** der Schiffskörper (2) in zumindest vier Segmente geteilt ist.

7. Schiffsmodell (1) nach einem der Ansprüche 5 oder 6,
**dadurch gekennzeichnet,**
**daß** einzelne Segmente (S1;S2;S3;S4;S5;S6) unter die Wasseroberfläche (3) versenkbar sind, während andere (S1;S2;S3;S4; S5;S6) noch in einer Schwimmstellung auf der Wasseroberfläche (3) verbleiben.

8. Schiffsmodell (1) nach einem der Ansprüche 5 bis 7,
**dadurch gekennzeichnet,**
**daß** dieses insgesamt in eine kontrollierte, zusammenhängende und teilweise unter der Wasseroberfläche (3) liegende Schrägstellung verbringbar ist.

9. Schiffsmodell (1) nach einem der Ansprüche 5 bis 8,
**dadurch gekennzeichnet,**
**daß** ein zumindest nahezu vollständig unter der Wasseroberfläche (3) liegendes Segment (zum Beispiel S1) dort gegenüber einem dahinter liegenden Segment (zum Beispiel S2) um seine gelenkige Anbindung (zum Beispiel 7) aufschwenkbar und dadurch in eine zumindest nahezu horizontale Stellung unter der Wasseroberfläche (3) bringbar ist.

10. Schiffsmodell (1) nach einem der Ansprüche 5 bis 9,
**dadurch gekennzeichnet,**
**daß** das oder die aufgestellte(n) Segment(e) (S6) in ihrer aufragenden Stellung unter die Wasseroberfläche (3) absenkbar ist oder sind.

11. Schiffsmodell (1) nach einem der Ansprüche 5 bis 10,
**dadurch gekennzeichnet,**
**daß** jedes Segment oder zumindest einzelne Segmente (S1;S2;S3;S4;S5;S6) mit zumindest einem variabel befüll- und entleerbaren Auftriebstank versehen (T1;T11;T2;T12;T3; T13;T4;T14;T5;T15;T6;T16) ist oder sind und über deren Entleerung oder Befüllung eine Lageveränderung dieses oder dieser Segment(e) bewirkbar ist.

12. Schiffsmodell (1) nach einem der Ansprüche 5 bis 11,
**dadurch gekennzeichnet,**
**daß** das Schiffsmodell (1) in einem Becken (20) gehalten ist und jedes Segment oder zumindest einzelne Segmente (S5) in ihrer abgesenkten Stellung von dem Beckengrund (21) abgestützt sind.

13. Schiffsmodell (1) nach Anspruch 12,
**dadurch gekennzeichnet,**
**daß** das Becken (20) bei einer Länge des Schiffsmodells (1) von mehr als 200 Metern eine Tiefe von weniger als 40 Metern aufweist.

14. Schiffsmodell (1) nach einem der Ansprüche 12 oder 13,
**dadurch gekennzeichnet,**
**daß** ein den aufragend stellbaren Segmenten (S6) vorgeordnetes Segment (S5) in seiner abgesenkten Stellung in einer schräg nach hinten ansteigenden Lage halterbar ist.

15. Schiffsmodell nach Anspruch 14,
**dadurch gekennzeichnet,**
**daß** das vorgeordnete Segment (S5) eine hierfür gegenüber der Kiellinie (12) weiterer Segmente (S1 bis S4) nach unten ausgreifende Kiellinie (12) aufweist.

16. Schiffsmodell nach einem der Ansprüche 14 oder 15,
**dadurch gekennzeichnet,**
**daß** zur Abstützung des abgesenkten vorgeordneten Segments der Beckengrund (21) eine aufwärts weisende und nach oben stufenartig abgesetzte Schrägfläche (24) aufweist.

17. Schiffsmodell (1) nach einem der Ansprüche 5 bis 16,
**dadurch gekennzeichnet,**
**daß** dieses von einer hallenartigen Decke (25) überwölbt ist und an diese unterschiedliche optische Szenarien projizierbar sind.

18. Schiffsmodell (1) nach einem der Ansprüche 5 bis 17,
**dadurch gekennzeichnet,**
**daß** dieses nach Art eines Passagierschiffs ausgebildet ist.

19. Schiffsmodell (1) nach einem der Ansprüche 5 bis 18,
**dadurch gekennzeichnet,**
**daß** dieses im Maßstab 1:2 bis 1:1 ausgebildet ist.

## Claims

1. A method for simulating the sinking of a ship, in which a ship model (1) is sunk under a water surface (3),
**characterized in that**
a sinking ship is reenacted using a ship model (1) divided into several segments (S1; S2; S3; S4; S5; S6) over its progression, which is initially brought into an overall inclined location, and hence one that presses a portion of the ship model (1) under the water surface (3), wherein once a first segment (S1) has been completely lowered under the water surface (3), it is brought into a upwardly swinging position relative to the next segment (S2).

2. The method according to claim 1,
**characterized in that**
after a segment (for example, S2) following an already lowered segment (for example, S1) has been completely lowered under the water surface (3), it is brought into a position that swings upwardly and opens into a horizontal location relative to its sternward adjoining segment (for example, S3).

3. The method according to claim 1 or 2,
**characterized in that**
individual segments (S5; S6) are interconnected via a multi-joint arrangement (11), which is used during a sinking simulation to bring one or several, in particular sternward lying segments (S6), into an upright position inclined by more than 600 relative to the water surface (3).

4. The method according to claim 3,
**characterized in that**
the erected segment(s) (S6) is or are lowered under the water surface (3) in their upright position.

5. A ship model (1) for controlled sinking and resurfacing, with a long extended hull (2), wherein the hull (2) is divided over its longitudinal extension (L) into several segments (S1; S2; S3; S4; S5; S6) that can be moved relative to each other and submersed under a water surface (3), wherein all or at least individual segments are provided with variably fillable and drainable buoyancy tanks and/or guided on the floor of a basin, wherein the segments (S1; S2; S3; S4; S5; S6) are hinged together and individual adjacent segments (S3; S4; S5; S6) are interconnected via a multi-joint arrangement (11), and further that one or several in particular sternward lying segments (86) can be set up in an upright position inclined by more than 600 relative to the water surface (3).

6. The ship model (1) according to claim 5,
**characterized in that**
the hull (2) is divided into at least four segments.

7. The ship model (1) according to one of claims 5 or 6,
**characterized in that**
individual segments (S1; S2; S3 S4; S5; S6) can be submersed under the water surface (3), while others (S1; S2; S3 S4; S5; S6) remain in a floating position on the water surface (3).

8. The ship model (1) according to one of claims 5 to 7,
**characterized in that**
it can be brought into an overall controlled, contiguous inclined position that partially lies under the water surface (3).

9. The ship model (1) according to one of claims 5 to 8,
**characterized in that**
a segment (for example, S1) lying at least nearly completely under the water surface (3) can there be upwardly swiveled relative to a segment lying behind it (for example, S2) around its articulated connection (for example, 7), and thereby be brought into an at least nearly horizontal position under the water surface (3).

10. The ship model (1) according to one of claims 5 to 9,
**characterized in that**
the segment(s) (S6) set up in their upright position is or are lowered under the water surface (3).

11. The ship model (1) according to one of claims 5 to 10,
**characterized in that**
each segment or at least individual segments (S1; S2; S3 S4; S5; S6) is or are provided with at least one variably fillable and drainable buoyancy tank (T1; T11; T2; T12; T3; T13; T4; T14; T5; T15; T6; T16), and the location of this or these segment(s) can be changed by draining or filling them.

12. The ship model (1) according to one of claims 5 to 11,
**characterized in that**
the ship model (1) is held in a basin (20), and each segment or at least individual segments (S5) are supported by the basin floor (21) in their lowered position.

13. The ship model (1) according to claim 12,
**characterized in that**
the basin (20) has a depth of less than 40 meters given a length of the ship model (1) exceeding 200 meters.

14. The ship model (1) according to one of claims 12 or 13,
**characterized in that**
a segment (S5) placed upstream from the segments (S6) that can be set upright can be held in a location rearwardly rising at an inclination in its lowered position.

15. The ship model (1) according to claim 14,
**characterized in that**
the upstream segment (S5) has a downwardly extending keel line (12) for this purpose relative to the keel line (12) of other segments (S1 to S4).

16. The ship model (1) according to one of claims 14 or 15,
**characterized in that**
the basin floor (21) has an upwardly facing inclined surface stepped toward the top (24) in order to support the lowered, upstream segment.

17. The ship model (1) according to one of claims 5 to 16,
**characterized in that**
it is vaulted by a hall-like ceiling (25), onto which different optical scenarios can be projected.

18. The ship model (1) according to one of claims 5 to 17,
**characterized in that**
it is designed like a passenger ship.

19. The ship model (1) according to one of claims 5 to 18,
**characterized in that**
it is designed on a scale of 1:2 to 1:1.

## Revendications

1. Procédé, destiné à simuler un naufrage, lors duquel, l'on submerge un modèle de navire (1) sous une surface de l'eau (3),
**caractérisé**
**en ce que** l'on reconstitue un navire qui coule avec un modèle de navire (1) divisé en plusieurs segments (S 1 ; S2 ; S3 ; S4 ; S5 ; S6) sur son tracé, que l'on amène dans un premier temps dans une position globalement inclinée et poussant ainsi une partie du modèle de navire (1) sous la surface de l'eau (3), après la submersion totale d'un premier segment (S1) sous la surface de l'eau (3), celui-ci étant amené dans une situation pivotant vers le haut par rapport au segment (S2) suivant.

2. Procédé selon la revendication 1,
**caractérisé**
**en ce qu'**après la submersion totale d'un segment suivant (par exemple S2), un segment déjà submergé (par exemple S1) sous la surface de l'eau (3), l'on amène celui-ci dans une position pivotant vers le haut par rapport au segment qui s'y raccorde sur l'arrière (par exemple S3) et ouvrant une situation horizontale.

3. Procédé selon l'une quelconque des revendications 1 ou 2,
**caractérisé**
**en ce que** des segments (S5 ; S6) individuels sont reliés les uns aux autres par l'intermédiaire d'un ensemble à articulations multiples (11) et l'on amène par cet intermédiaire pendant la simulation du naufrage un ou plusieurs segments (S6), situés notamment à l'arrière dans une position saillant vers le haut, inclinée de plus de 60° par rapport à la surface de l'eau (3).

4. Procédé selon la revendication 3,
caractérisé
que l'on submerge l'un ou les segment(s) (S6) dressé(s) dans leur position saillant vers le haut sous la surface de l'eau (3).

5. Modèle de navire (1) destiné un naufrage et à un retour en surface contrôlés, pourvu d'une coque (2) allongée, sur son extension longitudinale (L), la coque (2) étant divisée en plusieurs segments (S1 ; S2 ; S3 ; S4 ; S5 ; S6) déplaçables les uns vers les autres et susceptibles d'être submergés sous une surface de l'eau (3), tous ou au moins des segments individuels étant munis de caisses de flottabilité à capacité de remplissage et de vidage variable et / ou étant guidés sur le fond inférieur d'un bassin, les segments (S1 ; S2 ; S3 ; S4 ; S5 ; S6) étant reliés les uns aux autres de manière articulée et des segments (S3, S4 ; S5, S6) individuels voisins étant reliés les uns aux autres par l'intermédiaire d'un ensemble à articulations multiples (11) et de ce fait, une mise debout d'un ou de plusieurs segments (S6) situés notamment à l'arrière dans une position saillant vers le haut, inclinée de plus de 60° par rapport à la surface de l'eau (3) étant possible.

6. Modèle de navire (1) selon la revendication 5,
**caractérisé**
**en ce que** la coque (2) est divisée en au moins quatre segments.

7. Modèle de navire (1) selon l'une quelconque des revendications 5 ou 6,
**caractérisé**
**en ce que** des segments (S1 ; S2 ; S3 ; S4 ; S5 ; S6) sont submersibles sous la surface de l'eau (3), alors que d'autres (S1 ; S2 ; S3 ; S4 ; S5 ; S6) restent encore dans une position flottante sur la surface de l'eau (3).

8. Modèle de navire (1) selon l'une quelconque des revendications 5 à 7,
**caractérisé**
**en ce qu'**il est susceptible d'être amené globalement dans une position oblique contrôlée, cohérente et située en partie sous la surface de l'eau (3).

9. Modèle de navire (1) selon l'une quelconque des revendications 5 à 8,
**caractérisé**
**en ce qu'**un segment (par exemple S1) situé au moins presque totalement sous la surface de l'eau (3) y est susceptible de pivoter vers le haut par rapport à un segment (par exemple S2) situé derrière lui par l'intermédiaire de son raccordement articulé (par exemple 7) et d'être amené de ce fait dans une position au moins approximativement horizontale sous la surface de l'eau (3).

10. Modèle de navire (1) selon l'une quelconque des revendications 5 à 9,
**caractérisé**
**en ce que** le ou les segment(s) (S6) dressés est ou sont susceptibles d'être submergé(s) sous la surface de l'eau (3) dans leur position saillant vers le haut.

11. Modèle de navire (1) selon l'une quelconque des revendications 5 à 10,
**caractérisé**
**en ce que** chaque segment ou au moins des segments (S1 ; S2 ; S3 ; S4 ; S5 ; S6) individuels est ou sont muni(s) d'au moins une caisse de flottabilité à capacité de remplissage et de vidage variable (Tl ; T11 ; T2 ; Tl2 ; T3 ; T13 ; T4 ; Tl4 ; T5 ; T15 ; T6 ; T16) et par son vidage ou son remplissage, une modification de la situation dudit ou desdits segment(s) pouvant être initiée.

12. Modèle de navire (1) selon l'une quelconque des revendications 5 à 11,
**caractérisé**
**en ce que** le modèle de navire (1) est maintenu dans un bassin (20) et chaque segment ou au moins des segments (S5) individuels sont soutenus dans leur position submergée par le fond du bassin (21).

13. Modèle de navire (1) selon la revendication 12,
**caractérisé**
**en ce que** pour une longueur du modèle de navire (1) de plus de 200 mètres, le bassin (20) présente une profondeur de moins de 40 mètres.

14. Modèle de navire (1) selon l'une quelconque des revendications 12 ou 13,
**caractérisé**
**en ce qu'**un segment (S5) antéposé aux segments (S6) susceptibles d'être amenés en saillie vers le haut est susceptible d'être maintenu dans sa position submergée dans une situation croissant en inclinaison vers l'arrière.

15. Modèle de navire selon la revendication 14,
**caractérisé**
**en ce que** le segment (S5) entreposé présente une ligne de flottaison (12) ressortant vers le bas par rapport à la ligne de flottaison (12) d'autres segments (S1 à S4).

16. Modèle de navire (1) selon l'une quelconque des revendications 14 ou 15,
**caractérisé**
**en ce que** pour soutenir le segment antéposé, le fond du bassin (21) présente une surface inclinée (24) dirigée vers le haut et interrompue en échelons.

17. Modèle de navire (1) selon l'une quelconque des revendications 5 à 16,
**caractérisé**
**en ce que** celui-ci est survoûté d'une couverture (25) de type hall et que différents scénarios optiques sont susceptibles d'être projetés sur celle-ci.

18. Modèle de navire (1) selon l'une quelconque des revendications 5 à 17,
**caractérisé**
**en ce que** celui-ci est conçu à la manière d'un paquebot.

19. Modèle de navire (1) selon l'une quelconque des revendications 5 à 18,
**caractérisé**
**en ce que** celui-ci est conçu à l'échelle de 1 : 2 à 1 : 1.
